# EUROPÄISCHE PATENTSCHRIFT

(11) **EP 0 775 291 B1**
(45) Veröffentlichungstag und Bekanntmachung des Hinweises auf die Patenterteilung: **27.01.1999**
(21) Anmeldenummer: 95924866.7
(22) Anmeldetag: 19.07.1995
(51) Int. Cl.: G01D 7/00, G01P 1/08, G01D 11/28, G01D 13/22

(54) **ANZEIGEINSTRUMENT**
DISPLAY INSTRUMENT
INSTRUMENT D'AFFICHAGE

(30) Priorität: 12.08.1994 DE 4428549; 14.12.1994 DE 4444471
(43) Veröffentlichungstag der Anmeldung: 28.05.1997
(73) Patentinhaber: Moto Meter GmbH, D-71229 Leonberg (DE)
(72) Erfinder: KNOLL, Peter, D-76275 Ettlingen (DE); MÜLLER-SYBRICHS, Ralf, D-71254 Ditzingen (DE); OREANS, Derk, D-71229 Leonberg (DE)
(74) Vertreter: Friedmann, Jürgen, Dr.-Ing.
(86) Internationale Anmeldenummer: DE9500944
(87) Internationale Veröffentlichungsnummer: WO9605482

(56) Entgegenhaltungen:
- EP-A- 0 497 316
- GB-A- 2 024 426
- US-A- 5 142 456
- PATENT ABSTRACTS OF JAPAN vol. 15 no. 99 (P-1177) ,11.März 1991 & JP,A,02 310471 (NISSAN MOTOR CO LTD) 26.Dezember 1990,
- MACHINE DESIGN, Bd. 61, Nr. 12, Juni 1989 CLEVELAND,OHIO,US, Seiten 710-725, XP 000032798 'Indicators and displays'
- PATENT ABSTRACTS OF JAPAN vol. 14 no. 150 (P-1025) ,22.März 1990 & JP,A,02 010317 (HITACHI LTD) 16.Januar 1990,

## Beschreibung

### Stand der Technik

Die Erfindung geht aus von einem Anzeigeeinstrument, bei dem zwei Anzeigen über einen halbdurchlässigen Spiegel auf einer Anzeigefläche des Anzeigeinstruments optisch vereinigt werden. Bei einem solchem Anzeigeinstrument ist es möglich, wahlweise eine der beiden Anzeigen oder auch beide Anzeigen gemeinsam auf der Anzeigefläche zu betrachten. Das Anzeigeeinstrument selbst weist dabei allerdings eine relativ hohe Bautiefe und zudem eine relativ hohe optische Abschwächung auf, wodurch der Aufwand für die Beleuchtung des Anzeigeeinstruments hoch ist.

Aus der JP-A-02 310 471 ist ein Anzeigegerät mit einer analogen und einer digitalen Anzeige bekannt, wobei die analoge Anzeige eine Zeigeranordnung ist, bei welcher in den Zeiger das Licht einer Lichtquelle eingekoppelt ist. Auf der dem Betrachter abgewandten Seite der Zeigeranordnung ist ein Elektroluminiszenz-Board vorgesehen, während auf der dem Betrachter zugewandten Seite der Zeigeranordnung zwei Flüssigkristallanzeigen angeordnet sind, die durch das Elektroluminiszenz-Board beleuchtet wird. Eine Diffusionsscheibe leitet das Licht des Elektroluminiszenz-Board an die Flüssigkristallanzeige, so daß das Elektroluminiszenz-Board der Beleuchtung der Flüssigkristallanzeigen dient.

Aus der EP 0 497 316 A1 ist ferner ein Anzeigeeinstrument mit einer einzelnen Anzeige bekannt, wobei als Zeigereinrichtung ein Scheibenzeiger verwendet wird.

Aus der GB-2024426 A ist eine Anzeigeeinrichtung bekannt, welche ein Zifferblatt aufweist, vor dem ein beweglicher Zeiger angeordnet ist, und wobei das von einer Leuchtquelle zur Verfügung gestellte Licht in das Ziffernblatt und in den beweglichen Zeiger eingekoppelt wird, so daß die Zeigeranordnung beleuchtbar ist.

### Vorteile der Erfindung

Das erfindungsgemäße Anzeigeinstrument mit den Merkmalen des Patentanspruchs 1 hat demgegenüber den Vorteil, daß es eine äußerst geringe Bautiefe aufweist, was den Einbau des Anzeigeinstruments erleichtert. Außerdem weist es eine geringe optische Abschwächung auf, wodurch der Aufwand für die Beleuchtung des Anzeigeinstruments sehr niedrig ist.

In den abhängigen Ansprüchen sind vorteilhafte Weiterbildungen und Verbesserungen des im Patentanspruch 1 angegebenen Anzeigeinstruments möglich.

Die Ausbildung der ersten Anzeige als Zeigerinstrument bringt den Vorteil mit sich, daß eine Kombination eines im Kraftfahrzeugbereich beispielsweise für die Anzeige der Geschwindigkeit üblichen Zeigerinstruments mit einer Elektrolumineszenzanzeige für andere für die Darstellung auf der Elektrolumineszenzanzeige besser geeignete Informationen geschaffen wird.

Das Aufbringen des Zifferblatts auf einem lichtleitenden Stützkörper bringt den Vorteil mit sich, daß das Zifferblatt zum einen eine mechanische Halterung erfährt und daß der lichtleitende Stützkörper außerdem zusätzlich als Lichtleiter für Licht zur Beleuchtung des Zifferblatts dient.

Die Bautiefe des Anzeigeinstruments wird in vorteilhafter Weise verringert, wenn bei vor dem Zeiger angeordneter Elektrolumineszenzanzeige im Stützkörper eine Vertiefung angeordnet ist, in die der Zeiger ragt.

Wird die Elektrolumineszenzanzeige auf dem Zifferblatt befestigt, so verringert sich noch einmal die Bautiefe des Anzeigeinstruments. Außerdem erfährt die Elektrolumineszenzanzeige dadurch eine mechanisch stabile Halterung. Des weiteren verringern sich optische Verzerrungen (z.B. Parallaxen) beim Ablesen der Anzeige auf dem Zifferblatt.

Die Ausbildung des Zeigers als scheibenförmigen, lichtleitenden Körper mit einem als Zeiger dienenden Ausschnitt in einer lichtundurchlässigen Abdeckschicht führt zu dem Vorteil, daß der Zeiger besonders einfach über den scheibenförmigen, lichtleitenden Körper beleuchtbar ist. Zudem übt der Zeiger bei der Drehbewegung auf einer den Zeiger halternden Welle nahezu keine Unwucht auf die Welle aus. Außerdem ist die Ausbildung als Scheibe besonders gut für das Erreichen eines dunklen Erscheinungsbildes bei abgeschalteter Beleuchtung des Zeigers geeignet

Wird der Zeiger aus einem scheibenförmigen, lichtundurchlässigen Körper gebildet, der eine als Zeiger dienende Aussparung aufweist, so kann in vorteilhafter Weise das Licht der zur Beleuchtung des Zifferblatts vorgesehenen Beleuchtungsmittel gleichzeitig, ohne einen weiteren lichtleitenden Körper für den Zeiger vorzusehen, als beleuchteter Zeiger verwendet werden. Dadurch verringert sich also der Aufwand. Auch hier übt der Zeiger durch seine annähernd rotationssymmetrische Form nahezu keine Unwucht auf eine den Zeiger halternde Welle aus.

Wird ein den Zeiger antreibendes Zeigerantriebswerk zusammen mit dem Beleuchtungsmittel an einer Grundplatte befestigt, so vermindert sich der Aufwand zur Halterung und zur Stromversorgung des Zeigerantriebswerks und der Beleuchtungsmittel. Außerdem verhindert die Grundplatte gleichzeitig das Eindringen von Störlicht in den Gehäuseinnenraum des Anzeigeinstruments.

Es stellt einen weiteren Vorteil dar, wenn die erste Anzeige eine LCD-Anzeige, eine LED-Anzeige oder Leuchtmittel aufweist, da daraus eine besonders flache Bauweise des Anzeigeinstruments resultiert.

Wenn zwischen der ersten Anzeige und der Elektrolumineszenz-Anzeige wenigstens eine weitere Elektrolumineszenz-Anzeige vorgesehen ist, so läßt sich das Anzeigeinstrument mit mehreren Anzeigen vielschichtig gestalten, wodurch es eine besondere Variabilität erhält.

Wird vor der ersten Anzeige und der Elektrolumineszenzanzeige eine Deckscheibe angeordnet, so sind diese Anzeigen vor Umwelteinflüssen und ungewollter mechanischer Einwirkung geschützt.

Ist die Deckscheibe als Zirkularpolarisator ausgeführt, so dient die Deckscheibe in vorteilhafter Weise der Entspiegelung der innerhalb des Anzeigeinstruments liegenden Oberfläche der Elektrolumineszenzanzeige,

Ein Farbfilter bietet den Vorteil, daß von außen durch die Deckscheibe in den Innenraum des Anzeigeinstruments fallendes Licht gedämpft wird.

Ist die Deckscheibe geneigt, so daß sich eine schwarze Oberfläche darin zur Betrachterebene hin spiegelt, so resultiert daraus eine auf kostengünstige Weise erreichbare Entspiegelung der Oberfläche der Deckscheibe.

### Zeichnung

Ausführungsbeispiele der Erfindung sind in der Zeichnung dargestellt und in der nachfolgenden Beschreibung näher erläutert.

Es zeigen:
Figur 1 ein Anzeigeinstrument mit scheibenförmigem Zeiger und Deckscheibe,
Figur 2 ein Anzeigeinstrument mit scheibenförmigem Zeiger und direkt auf dem Zifferblatt angebrachter Elektrolumineszenzanzeige,
Figur 3 einen scheibenförmigen Zeiger in Draufsicht,
Figur 4 ein Anzeigeinstrument mit vor der Elektrolumineszenzanzeige beweglichem Zeiger.
Figur 5 ein Anzeigeinstrument mit einer LED-Anzeige und zwei übereinander liegenden Elektrolumineszenzanzeigen.

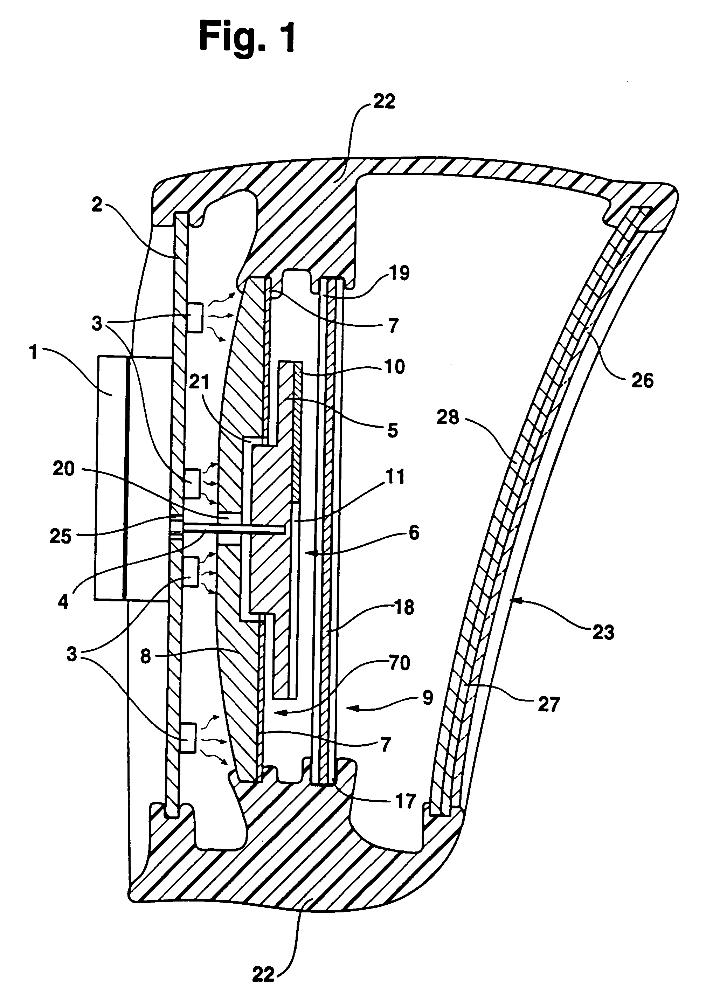

In Figur 1 ist ein Anzeigeinstrument dargestellt, bei dem ein Zeigerantriebswerk 1, welches eine Welle 4 rotatorisch antreibt, an einer Grundplatte 2 befestigt ist, wobei die Welle 4 einen Durchbruch 25 in der Grundplatte 2 durchstößt. Auf der dem Zeigerantriebswerk 1 abgewandten Seite weist die Grundplatte 2 mehrere Beleuchtungsmittel 3 auf. Die Beleuchtungsmittel 3 beleuchten einen lichtleitenden, scheibenförmigen, in etwa plankonvexen Stützkörper 8, auf dessen den Beleuchtungsmitteln 3 abgewandter, in etwa planer Seite ein ringförmiges Zifferblatt 7 angebracht ist. Die Welle 4 durchstößt eine Durchführung 20 im lichtleitenden Stützkörper 8. Außerdem weist der lichtleitende Stützkörper 8, welcher rotationssymmetrisch ausgebildet ist, eine konzentrisch zu seiner Symmetrieachse, in welcher die Welle 4 verläuft, angeordnete Vertiefung 21 auf, die im Zentrum des ringförmigen Zifferblattes 7 liegt. Die Welle 4 trägt an ihrem Ende einen scheibenförmigen, lichtleitenden Körper 5, der aus zwei zylindrischen konzentrisch angeordneten Einzelscheiben mit unterschiedlichem Durchmesser zusammengesetzt ist. Die Einzelscheibe des lichtleitenden, scheibenförmigen Körpers 5, mit dem niedrigeren Durchmesser ist dabei mit einer planen Grundfläche der Grundplatte 2 zugewandt. Auf der gegenüberliegenden Seite trägt der lichtleitende, scheibenförmige Körper 5 auf der planen Grundfläche der Einzelscheibe mit dem größeren Durchmesser eine lichtundurchlässige Abdeckschicht 10, die einen Ausschnitt 11 aufweist. Der Ausschnitt 11 ist als radial verlaufender Schlitz in der Abdeckschicht 10 ausgebildet. Der lichtleitende, scheibenförmige Körper 5 bildet zusammen mit der Abdeckschicht 10 und dem darin liegenden Ausschnitt 11 einen Zeiger 6. Vor dem Zeiger 6 ist eine Elektrolumineszenzanzeige 9 angeordnet, die eine als Frontelektrode 17 ausgebildete strukturierte transparente Schicht, eine als Rückelektrode 19 ausgebildete weitere strukturierte transparente Schicht und eine zwischen den beiden Elektroden 17, 19 angeordnete elektrolumineszente Schicht 18 aufweist. Die Grundplatte 2, der lichtleitende Stützkörper 8 und die Elektrolumineszenzanzeige 9 sind zusammen in einem Gehäuse 22 gehaltert, welches vor der Elektrolumineszenzanzeige 9 eine durchsichtige Deckscheibe 23 aufweist. Die Deckscheibe 23 umfaßt eine λ/4-schicht 28 auf der dem Gehäuseinnenraum zugewandten Seite und ein Farbfilter 26 auf der Außenseite des Anzeigeinstruments, sowie einen zwischen Farbfilter 26 und λ/4-schicht 28 angeordneten Linearpolarisator 27. Der Zeiger 6 und das Zifferblatt 7 bilden zusammen eine erste Anzeige 70.

Das Zeigerantriebswerk 1 treibt den Zeiger 6 rotatorisch an. Der Zeiger 6 ragt dabei mit der Einzelscheibe mit dem geringeren Durchmesser des scheibenförmigen, lichtleitenden Körpers 5 in die Vertiefung 21. Dadurch verringert sich die Bauhöhe des Anzeigeinstruments bei gleichzeitiger Erhaltung der Zeigerstabilität. Die Beleuchtungsmittel 3 beleuchten den lichtleitenden Stützkörper 8 von seiner Rückseite her. Das Licht gelangt in den lichtleitenden Stützkörper 8 und wird von diesem auf die Rückseite des ringförmigen Zifferblatts 7 geleitet. Das Licht beleuchtet somit das Zifferblatt 7 von hinten. Außerdem gelangt Licht aus dem lichtleitenden Stützkörper 8 durch die Vertiefung 21 hindurch in den lichtleitenden, scheibenförmigen Körper 5 des Zeigers 6. Das dort eintretende Licht wird nur durch den Ausschnitt 11 in Richtung auf die Elektrolumineszenzanzeige 9 und durch die Elektrolumineszenzanzeige 9 und die Deckscheibe 23 hindurch zu einer Betrachterebene geleitet. Somit erscheint der Ausschnitt 11 beleuchtet und dient daher als Zeiger 6 mit einem Erscheinungsbild wie ein beleuchteter lanzenförmiger Zeiger der bekannten Art. Sind die Beleuchtungsmittel 3 eingeschaltet, so werden also das Zifferblatt 7 und der Zeiger 6 bzw. die erste Anzeige 70 von ihrer Rückseite beleuchtet. Die Elektrolumineszenzanzeige 9 ist in diesem Fall ausgeschaltet. Im ausgeschalteten Zustand ist die Elektrolumineszenzanzeige 9 nahezu lichtdurchlässig. Somit kann ein in der Betrachterebene befindlicher Betrachter, der das Anzeigeinstrument durch der Deckscheibe 23 hindurch betrachtet, durch die Elektrolumineszenzanzeige 9 hindurch die beleuchtete erste Anzeige 70 betrachten und die angezeigten Informationen ablesen.

Sind die Beleuchtungsmittel 3 jedoch abgeschaltet, so gelangt von ihnen kein Licht mehr zum lichtleitenden Stützkörper 8 und daher auch nicht zum lichtleitenden, scheibenförmigen Körper 5. Das Zifferblatt 7 und der Zeiger 6 sind dabei so ausgeführt, daß sie im unbeleuchteten Zustand von vorne als näherungsweise gleichmäßig dunkle Fläche erscheinen. Als Materialien für das Zifferblatt 7 und die Abdeckschicht 10 sind Folien erhältlich, (z.B. Macrofol-Folien), welche ein solches, sogenanntes "Dead Front"-Verhalten zeigen. Die Elektrolumineszenzanzeige 9, deren elektrische Anschlüsse der Übersichtlichkeit halber hier nicht dargestellt sind und deren Ansteuerprinzip an sich bekannt ist, dient der Anzeige weiterer Informationen, welche vom Betrachter durch die Deckscheibe 23 hindurch betrachtet und abgelesen werden können. Üblicherweise ist es erwünscht, daß bei der Anzeige solcher weiterer Informationen mittels der Elektrolumineszenzanzeige 9 deren Hintergrund so dunkel erscheint, daß ein ungestörtes Ablesen der angezeigten weiteren Informationen möglich ist. Dadurch, daß das Zifferblatt 7 und der Zeiger 6 bei abgeschalteter Beleuchtung als nahezu gleichmäßig dunkle Fläche erscheinen, ist diese Forderung erfüllt. Somit kann wahlweise eine Anzeige der Informationen mittels des Zifferblatts 7 und des Zeigers 6 oder auch eine Anzeige der weiteren Informationen mittels der Elektrolumineszenzanzeige 9 erfolgen. Es ist aber ebenso vorgesehen, daß falls dies vom Betrachter gewünscht ist, beide Anzeigen zugleich erfolgen können, indem sowohl die Elektrolumineszenzanzeige 9 als auch der Zeiger 6 und das Zifferblatt 7 beleuchtet sind, so daß eine Kombination der angezeigten Informationen auf nur einer Anzeigefläche möglich ist. Die Elektrolumineszenzanzeige 9 ist in vorteilhafter Weise als ACTFELD (Alternating-Current-Thin-Film-Electro-Luminescent-Display) ausführbar. Dabei handelt es sich um eine besonders dünne Ausführung der Elektrolumineszenzanzeige 9. Dadurch wird ein hoher Transmissionsgrad bei ausgeschalteter Elektrolumineszenzanzeige 9 erreicht. Außerdem verringert sich somit die Bautiefe des Anzeigeinstruments.

Die Deckscheibe 23 ist als Zirkularpolarisator ausgeführt. Durch lineare Polarisation mittels des Linearpolarisators 27 und Drehung der Polarisationsebene um 90° mittels der λ/4-Schicht 28 wird Licht, welches durch die Deckscheibe 23 in den Anzeigeinstrumenteninnenraum hineingelangt und nach einer Reflexion an der Frontelektrode 17 der Elektrolumineszenzanzeige 9 von innen auf die Deckscheibe 23 auftrifft, daran gehindert, aus dem Anzeigeinstrumenteninnenraum auszutreten, was einer Entspiegelung der Elektrolumineszenzanzeige 9 entspricht. Das Farbfilter 26 weist vorzugsweise einen schmalbandigen Durchlaßbereich um die Wellenlänge des Lichts der Elektrolumineszenzanzeige 9 auf, welche für eine bekannte Dünnschicht-Elektrolumineszenzanzeige bei 585 nm (gelb) liegt. Dabei entsteht der Effekt, daß andersfarbiges Licht, welches von außen durch die Deckscheibe 23 hindurch in den Innenraum des Anzeigeinstruments fallen würde, stark gedämpft wird, wodurch keine unerwünschte Aufhellung des Anzeigeinstrumenteninnenraums erfolgt und somit der Anzeigenkontrast erhöht wird. Durch eine Neigung der Deckscheibe 23 zu einer schwarzen Oberfläche hin wird erreicht, daß diese sich für den Betrachter in der Deckscheibe 23 spiegelt. Damit ist eine Entspiegelung der Deckscheibe 23 mit einfachen Mitteln erreicht, welche sonst nur durch Beschichtung mit teuren Entspiegelungsschichten erreichbar wäre. Da das Anzeigeinstrument bevorzugt in Fahrzeugkombinationsinstrumenten z.B. von PKW's Anwendung findet, ist es möglich, die Deckscheibe zu diesem Zwecke zum Armaturenbrett hin zu neigen, da dieses meist schwarz gefärbt ist.

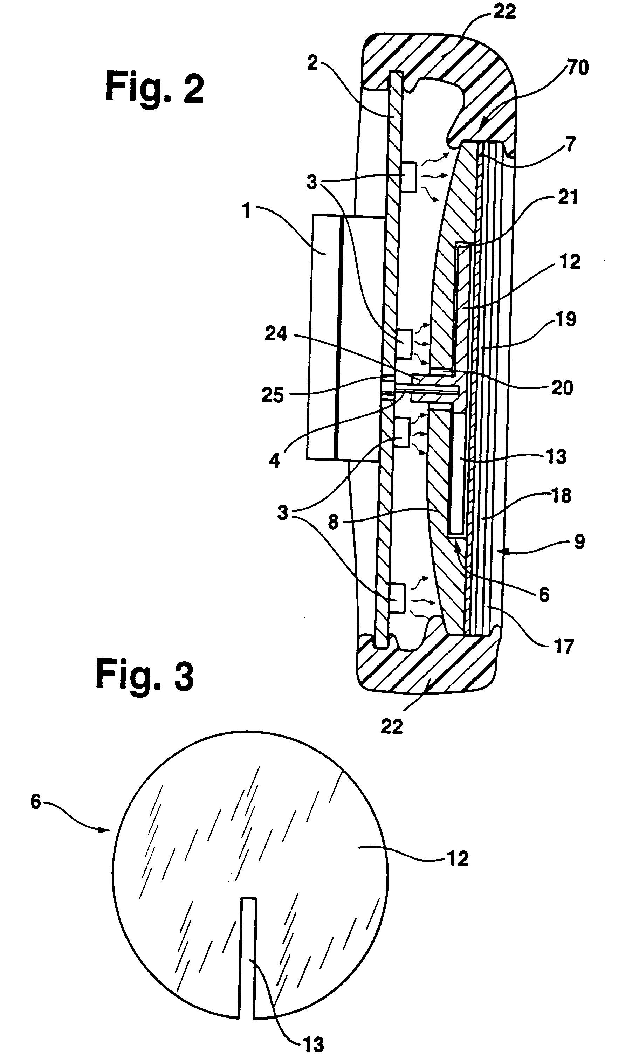

In Figur 2 ist ein weiteres Ausführungsbeispiel für ein Anzeigeinstrument dargestellt. Die Numerierung der einzelnen Bauteile wurde dabei aus Figur 1 beibehalten. Das Zeigerantriebswerk 1 ist wiederum an der Rückseite der Grundplatte 2 so befestigt, daß die vom Zeigerantriebswerk 1 angetriebene Welle 4 den Durchbruch 25 in der Grundplatte 2 durchstößt. Wiederum sind auf der Grundplatte 2 mehrere Beleuchtungsmittel 3 angeordnet, welche den lichtleitenden Stützkörper 8 beleuchten. Der lichtleitende Stützkörper 8 ist wiederum rotationssymmetrisch ausgebildet und weist konzentrisch zu seiner Symmetrieachse, in der die Welle 4 liegt, die zylindrische Durchführung 20 auf, die von der Welle 4 durchstoßen wird. Ein die gleiche Form wie der in Figur 1 gezeigte scheibenförmige, lichtleitende Körper 5 aufweisender scheibenförmiger, lichtundurchlässiger Körper 12 weist als Einzelscheibe mit geringerem Durchmesser eine Zeigernabe 24 auf, in die die Welle 4 eingeführt ist. Der lichtundurchlässige, scheibenförmige Körper 12 weist außerdem eine schlitzförmige Aussparung 13 auf, welche sich in radialer Richtung erstreckt. Der scheibenförmige, lichtundurchlässige Körper 12 bildet zusammen mit der schlitzförmigen Aussparung 13 einen annähernd rotationssymmetrischen Zeiger 6. Der lichtleitende Stützkörper 8 weist die Vertiefung 21 auf, in der die Einzelscheibe des Zeiger 6 mit dem größeren Durchmesser, welcher den Durchmesser der Vertiefung 21 unterschreitet, angeordnet ist, wobei dessen Zeigernabe 24, deren Durchmesser den Durchmesser der Durchführung 20 unterschreitet, die Durchführung 20 durchstößt. Die dem Betrachter zugewandte plane Oberfläche des lichtleitenden Stützkörpers 8 überragt die dem Betrachter zugewandte plane Oberfläche des scheibenförmigen, lichtundurchlässigen Körpers 12. Auf der Oberfläche des lichtleitenden Stützkörpers 8 ist das kreisförmige Zifferblatt 7 angebracht, das dabei einen Deckel für die Vertiefung 21 bildet. Direkt auf der Oberseite des Zifferblatts 7 ist die Elektrolumineszenzanzeige 9 aufgebracht. Die Elektrolumineszenzanzeige 9 umfaßt dabei die Rückelektrode 19, die Frontelektrode 17 und die zwischen den beiden Elektroden 17, 19 angeordnete elektrolumineszente Schicht 18. Die Elektrolumineszenzanzeige 9 bildet zusammen mit dem Zifferblatt 7 und dem lichtleitenden Stützkörper 8 somit eine feste in etwa plankonvexe Einheit. Diese Einheit ist ebenso wie die Grundplatte 2 im Gehäuse 22 gehaltert. Der Zeiger 6 und das Zifferblatt 7 bilden hier wiederum die erste Anzeige 70.

Die Beleuchtungsmittel 3 dienen hier wiederum der Beleuchtung des lichtleitenden Stützkörpers 8, welcher das eintretende Licht zum Zifferblatt 7 leitet. Die schlitzförmige Aussparung 13 im scheibenförmigen, lichtundurchlässigen Körper 12 dient dabei der Transmission von aus dem lichtleitenden Stützkörper 8 austretendem Licht in Richtung auf den Betrachter und bewirkt somit das Erscheinungsbild eines beleuchteten Zeigers 6. Ebenso wie bei der in Figur 1 dargestellten Anordnung ist auch hier bei ausgeschalteter Elektrolumineszenzanzeige 9 durch die in diesem Fall transparent erscheinende Elektrolumineszenzanzeige 9 hindurch ein direktes Betrachten der ersten Anzeige 70 und der darauf angezeigten Informationen möglich. Dazu sind die Beleuchtungsmittel 3 eingeschaltet. Im umgekehrten Falle sind die Beleuchtungsmittel 3 ausgeschaltet, und das Zifferblatt 7 und der Zeiger 6 erscheinen als nahezu gleichmäßig dunkle Hintergrundfläche für eine Anzeige der weiteren Informationen auf der Elektrolumineszenzanzeige 9. Diese erfolgt in bekannter Weise mittels Ansteuerung der Elektroden 17, 19. Auch hier ist es besonders zweckmäßig, die Elektrolumineszenzanzeige 9 als ACTFELD auszubilden, da sich so eine besonders geringe Bautiefe des Anzeigeinstruments ergibt. Durch den vollkommen in der Kontur des lichtleitenden Stützkörpers 8 eingebetteten Zeiger 6 ergibt sich zudem eine weitere Verringerung der Bautiefe und eine Verbesserung der Ablesegenauigkeit des Anzeigeinstruments.

In Figur 3 ist eine Draufsicht auf den Zeiger 6 dargestellt. Es ist zu erkennen, daß der Zeiger 6 annähernd rotationssymmetrisch ausgebildet ist, wobei die Symmetrie lediglich durch die radial nach außen verlaufende schlitzförmige Aussparung 13 im scheibenförmigen, lichtundurchlässigen Körper 12 unterbrochen ist. Durch die annähernd rotationssymmetrische Form übt der Zeiger 6 bei Beschleunigungen durch die den Zeiger 6 antreibende Welle 4 nur ein äußerst geringes Biegemoment auf die Welle 4 aus, wodurch die Anzeigegenauigkeit verbessert und die Lebensdauer des Anzeigeinstruments verlängert wird. Außerdem ist das geforderte "Dead Front"- Erscheinungsbild besonders gut erzielbar, da der Zeiger 6 eine große Oberfläche aufweist, die im am Stützkörper montierten Zustand nur einen kleinen ringförmigen Schlitz zwischen Stützkörper 8 und Zeiger 6 bedingt, der eine Inhomogenität des Erscheinungsbildes verursachen könnte.

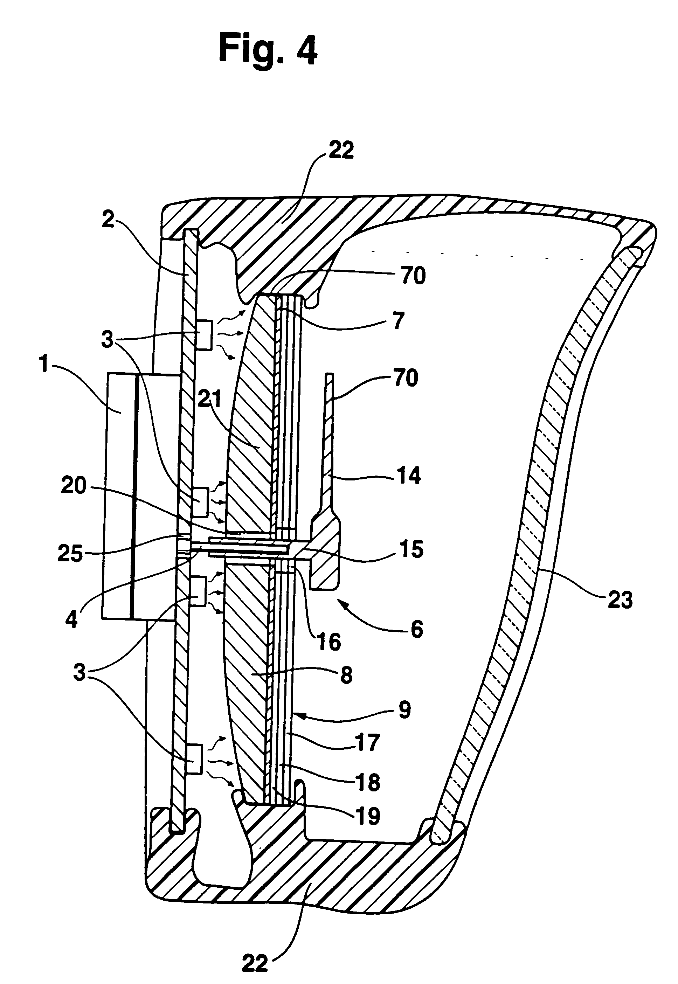

In Figur 4 ist ein drittes Ausführungsbeispiel für das Anzeigeinstrument dargestellt. Auch hier wurde wiederum die Numerierung der einzelnen Elemente gemäß der Figuren 1, 2 beibehalten. Das Zeigerantriebswerk 1 ist auf der Rückseite der Grundplatte 2 montiert, wobei die vom Zeigerantriebswerk 1 drehend angetriebene Welle 4 den Durchbruch 25 in der Grundplatte 2 durchstößt. Auf der dem Zeigerantriebswerk 1 abgekehrten Seite der Grundplatte 2 sind mehrere Beleuchtungsmittel 3 angeordnet, die den lichtleitenden, in etwa plankonvexen Stützkörper 8 beleuchten. Auf der den Beleuchtungsmitteln 3 abgewandten Seite ist auf dem lichtleitenden Stützkörper 8 das Zifferblatt 7 aufgebracht. Zifferblatt 7 und Stützkörper 8 weisen dabei die zylindrische Durchführung 20 auf, durch die die Welle 4 ragt. Der Zeiger 6, der eine Zeigerfahne 14 und eine lichtleitende Nabe 15 aufweist, ist mit der lichtleitenden Nabe 15 auf die Welle 4 aufgesteckt. Die lichtleitende Nabe 15 durchstößt dabei außerdem ein zylindrisches Loch 16, welches in der Elektrolumineszenzanzeige 9 vorhanden ist. Die Elektrolumineszenzanzeige 9 besteht aus drei Schichten, wobei die elektrolumineszente Schicht 18 zwischen der Rückelektrode 19 und der Frontelektrode 17 angeordnet ist. Die Elektrolumineszenzanzeige 9 ist ganzflächig auf dem Zifferblatt 7 aufgebracht. Außerdem ist die Deckscheibe 23 vor der Elektrolumineszenzanzeige 9 und dem Zeiger 6 angeordnet, welche ebenso wie die mit dem Zifferblatt 7 und dem lichtleitenden Stützkörper 8 verbundene Elektrolumineszenzanzeige 9 und die Grundplatte 2 in einem Gehäuse 22 gehaltert ist. Der Zeiger 6 und das Zifferblatt 7 bilden auch hier wiederum die erste Anzeige 70.

Hierbei handelt es sich um eine Ausgestaltung des Anzeigeinstruments, bei der der nicht rotationssymmetrisch ausgebildeter Zeiger 6 vor der Elektrolumineszenzanzeige 9 beweglich angeordnet ist. Von den Beleuchtungsmitteln 3 ausgehendes Licht beleuchtet dabei sowohl den lichtleitenden Stützkörper 8 als auch die lichtleitende Nabe 15 von deren Rückseite. Durch die lichtleitende Nabe 15 wird das eintretende Licht in die Zeigerfahne 14 geleitet, wodurch diese beleuchtet wird. Ebenso wird durch das in den licht leitenden Stützkörper 8 eintretende Licht das Zifferblatt 7 von hinten beleuchtet. Bei eingeschalteten Beleuchtungsmitteln 3 ist somit der leuchtende Zeiger 6 vor dem beleuchteten Zifferblatt 7 durch die Deckscheibe 23 hindurch erkennbar, wenn die Elektrolumineszenzanzeige 9 ausgeschaltet und somit lichtdurchlässig ist. Sind die Beleuchtungsmittel 3 ausgeschaltet, so erscheint das Zifferblatt 7 als annähernd dunkle Hintergrundfläche für die Elektrolumineszenzanzeige 9. Da der Zeiger 6 aus einem lichtleitenden, ansonsten nahezu transparenten Material besteht, stört auch er eine Anzeige der weiteren Informationen durch die Elektrolumineszenzanzeige 9 bei ausgeschalteten Beleuchtungsmitteln 3 nur in einem vernachlässigbaren Ausmaß. Da die Elektrolumineszenzanzeige 9 direkt auf dem Zifferblatt 7 aufgebracht ist verringert sich zum einen die Bautiefe, und zum anderen treten auch bei einem schrägen Betrachtungswinkel nahezu keine optischen Verzerrungen auf. Für den Fall einer gleichzeitigen Anzeige von Informationen mittels des Zifferblattes 7 und weiterer Informationen auf der Elektrolumineszenzanzeige 9 ist zudem der Parallaxenfehler sehr klein. Auch hier ist es wiederum zweckmäßig, die Elektrolumineszenzanzeige 9 als ACTFELD auszuführen. Ebenso ist es hier ebenfalls wiederum vorgesehen, die Deckscheibe 23 als Zirkularpolarisator mit einem Farbfilter 26 und in geneigter Lage auszuführen.

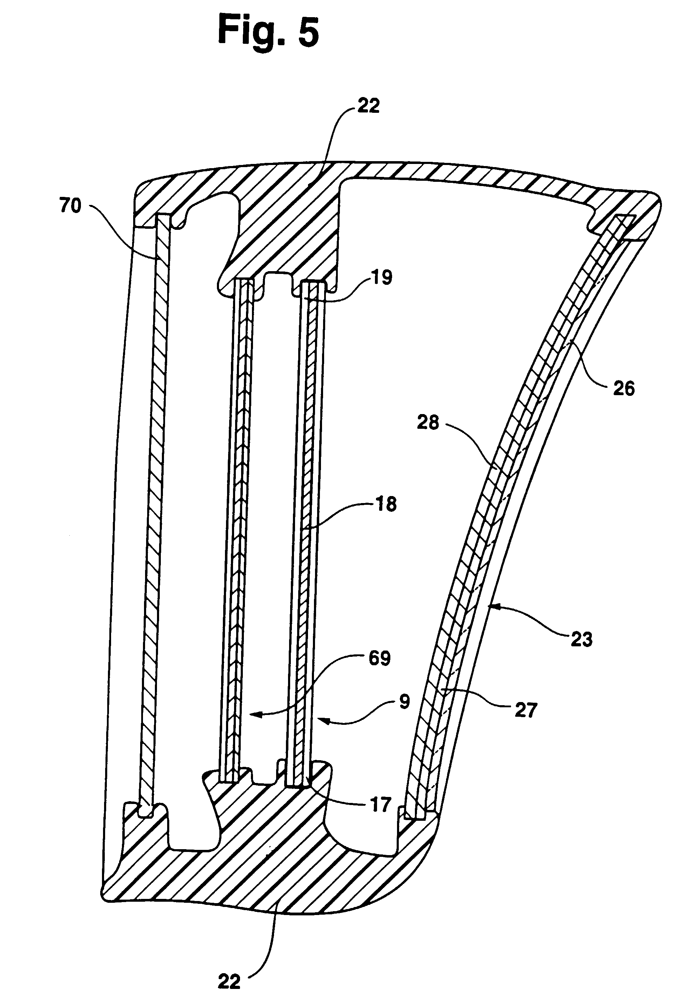

Als weitere Ausgestaltung für das erfindungsgemäße Anzeigeinstrument ist in Figur 5 eine Anordnung dargestellt, die sich durch folgende Unterschiede von der in Figur 1 dargestellten Anordnung abhebt: Vor der ersten Anzeige 70 sind hier im Gehäuse 22 zwei Elektrolumineszenzanzeigen 9, 69 angeordnet, wobei die erste Anzeige 70 als LED-Anzeige ausgebildet ist. Dadurch entfallen hier die Beleuchtungsmittel 3, die Grundplatte 2, der Stützkörper 8, der Zeiger 6, das Zifferblatt 7 und das Zeigerantriebswerk 1.

Dieses Anzeigeinstrument ist somit geeignet, durch Umschaltung zwischen den drei Anzeigen 70, 9, 69 verschiedene Informationen auf jeweils einer der Anzeigen 70, 9, 69 darzustellen. Dazu wird lediglich eine der drei Anzeigen 70, 9, 69 eingeschaltet, währen die beiden anderen Anzeigen 70, 9, 69 ausgeschaltet bleiben. Da die Elektrolumineszenzanzeigen 9, 69 transparent erscheinen, wenn sie nicht angesteuert werden, ist somit stets eine ungehinderte Sicht auf die gerade betriebene Anzeige 9, 69, 70 möglich. Umgekehrt bildet die LED-Anzeige 70 einen dunklen Hintergrund, falls eine der beiden Elektrolumineszenzanzeigen 9, 69 zur Darstellung von Informationen eingesetzt wird.

Als weitere Ausgestaltung für das erfindungsgemäße Anzeigeinstrument ist auch eine Hintereinanderanordnung mehrerer Elektrolumineszenzanzeigen 9, 69 vorgesehen, hinter denen die erste Anzeige 70 wenigstens teilweise angeordnet ist, die zeitweise beleuchtet und dadurch sichtbar, aber auch zeitweise unbeleuchtet und dunkel schaltbar ist. Eine solche Hintereinanderanordnung kann sogar zur Darstellung von Informationen in dreidimensionaler Form eingesetzt werden, indem die Elektrolumineszenzanzeigen 9, 69 und eventuell auch die erste Anzeige 70 gleichzeitig betrieben werden. Wie bereits gezeigt, muß die erste Anzeige 70 nicht unbedingt ein Zeigerinstrument umfassen. Sie kann ebenso eine LCD- oder LED-Anzeige oder Leuchtmittel beliebiger Art umfassen, die die Bedingung der Bildung eines dunklen Hintergrundes für die Elektrolumineszenzanzeige 9 in einem keine Information anzeigenden Zustand erfüllen.

Die Deckscheibe 23 ist ebenso als normale, transparente Scheibe ausführbar.

## Patentansprüche

1. Anzeigeinstrument mit einer ersten Anzeige und einer weiteren elektronischen Anzeige, wobei die weitere elektronische Anzeige wenigstens teilweise auf der dem Betrachter zugewandten Seite vor der ersten Anzeige angeordnet ist und eine Elektrolumineszenz-Anzeige (9) aufweist, wobei die erste Anzeige (70) entweder ein Zifferblatt (7), vor dem ein beweglicher Zeiger (6) angeordnet ist, eine LCD-Anzeige oder eine LED-Anzeige aufweist, wobei die erste Anzeige (70) in einen beleuchteten oder selbstleuchtenden Zustand bringbar ist, indem beispielsweise der bewegliche Zeiger (6) und das Zifferblatt (7) mittels eines Beleuchtungsmittels (3) beleuchtbar sind und wobei die erste Anzeige (70) im unbeleuchteten oder nicht selbst leuchtenden Zustand als nahezu gleichmäßig dunkle Fläche erscheint.

2. Anzeigeinstrument nach Anspruch 1, dadurch gekennzeichnet, daß, bei Verwendung eines Zifferblattes mit Zeiger, das Zifferblatt (7) auf einem lichtleitenden Stützkörper (8) aufgebracht ist.

3. Anzeigeinstrument nach Anspruch 2, dadurch gekennzeichnet, daß der Stützkörper (8) eine Vertiefung (21) aufweist, in die der Zeiger (6) zumindest teilweise hineinragt und daß die Elektrolumineszenz-Anzeige (9) vor dem Zeiger (6) angeordnet ist.

4. Anzeigeinstrument nach einem der Ansprüche 1 bis 3, dadurch gekennzeichnet, daß die Elektrolumineszenz-Anzeige (9), bei Verwendung eines Zifferblattes mit Zeiger, auf dem Zifferblatt (7) befestigt ist.

5. Anzeigeinstrument nach einem der Ansprüche 1 bis 4, dadurch gekennzeichnet, daß, bei Verwendung eines Zifferblattes mit Zeiger, zur Bildung des Zeigers (6) ein scheibenförmiger lichtleitender Körper (5) vorgesehen ist, dessen Vorderseite bis auf einen als Zeiger (6) dienenden Ausschnitt (11) von einer wenigstens nahezu lichtundurchlässigen Abdeckschicht (10) bedeckt ist.

6. Anzeigeinstrument nach einem der Ansprüche 1 bis 5, dadurch gekennzeichnet, daß, bei Verwendung eines Zifferblattes mit Zeiger, zur Bildung des Zeigers (6) ein scheibenförmiger wenigstens nahezu lichtundurchlässiger Körper (12) vorgesehen ist, der eine als Zeiger (6) dienende Aussparung (13) aufweist.

7. Anzeigeinstrument nach einem der Ansprüche 1 bis 6, dadurch gekennzeichnet, daß, bei Verwendung eines Zifferblattes mit Zeiger, der Zeiger (6) drehbar auf einer Welle (4) eines Zeigerantriebswerks (1) angeordnet ist, das zusammen mit dem Beleuchtungsmittel (3) an einer Grundplatte (2) befestigt ist.

8. Anzeigeinstrument nach einem der Ansprüche 1 bis 7, dadurch gekennzeichnet, daß zwischen der ersten Anzeige (70) und der Elektrolumineszenz-Anzeige (9) wenigstens eine weitere Elektrolumineszenz-Anzeige vorgesehen ist.

9. Anzeigeinstrument nach einem der Ansprüche 1 bis 8, dadurch gekennzeichnet, daß vor der ersten Anzeige (70) und der Elektrolumineszenz-Anzeige (9) eine Deckscheibe (23) vorgesehen ist.

10. Anzeigeinstrument nach Anspruch 9, dadurch gekennzeichnet, daß die Deckscheibe (23) als Zirkularpolarisator ausgeführt ist.

11. Anzeigeinstrument nach Anspruch 9 oder 10, dadurch gekennzeichnet, daß die Deckscheibe (23) ein nahezu nur für die Wellenlänge der Elektrolumineszenzanzeige (9) durchlässiges Farbfilter (26) aufweist.

12. Anzeigeinstrument nach einem der Ansprüche 1 bis 10, dadurch gekennzeichnet, daß die Deckscheibe (23) gegenüber einer Betrachterebene so geneigt ist, daß eine schwarze Oberfläche in der Deckscheibe (23) zur Betrachterebene reflektiert wird.

## Claims

1. Indicating instrument having a first display and a further electronic display, it being the case that the further electronic display is arranged at least partially on the side facing the viewer in front of the first display and has an electroluminescent display (9), the first display (70) having either a dial (7) in front of which a movable pointer (6) is arranged, an LCD display or an LED display, it being possible for the first display (70) to be brought into an illuminated or self-luminous state by virtue of the fact, for example, that the movable pointer (6) and the dial (7) can be illuminated with the aid of an illuminating means (3), and the first display (70) appearing in the non-illuminated or non-self-luminous state as a virtually uniformly dark area.

2. Indicating instrument according to Claim 1, characterized in that in the case of the use of a dial with a pointer, the dial (7) is applied to an optically conducting support member (8).

3. Indicating instrument according to Claim 2, characterized in that the support member (8) has a depression (21) into which the pointer (6) projects at least partially, and in that the electroluminescent display (9) is arranged in front of the pointer (6).

4. Indicating instrument according to one of Claims 1 to 3, characterized in that in the case of the use of a dial with a pointer, the electroluminescent display (9) is fastened to the dial (7).

5. Indicating instrument according to one of Claims 1 to 4, characterized in that in the case of the use of a dial with a pointer, there is provided for the purpose of forming the pointer (6) a disc-shaped optically conducting member (5) whose front side is covered, except for a section (11) serving as pointer (6) by a cover layer (10) which is at least virtually opaque.

6. Indicating instrument according to one of Claims 1 to 5, characterized in that in the case of the use of a dial with a pointer, there is provided for the purpose of forming the pointer (6) disc-shaped member (12) which is at least virtually opaque and has a recess (13) serving as pointer (6).

7. Indicating instrument according to one of Claims 1 to 6, characterized in that in the case of the use of a dial with a pointer, the pointer (6) is arranged rotatably on a shaft (4) of a pointer drive mechanism (1) which is fastened on a base plate (2) together with the illuminating means (3).

8. Indicating instrument according to one of Claims 1 to 7, characterized in that at least one further electroluminescent display is provided between the first display (70) and the electroluminescent display (9).

9. Indicating instrument according to one of Claims 1 to 8, characterized in that a cover plate (23) is provided in front of the first display (70) and the electroluminescent display (9).

10. Indicating instrument according to Claim 9, characterized in that the cover plate (23) is designed as a circular polarizer.

11. Indicating instrument according to Claim 9 or 10, characterized in that the cover plate (23) has a colour filter (26) which is transparent virtually only to the wavelength of the electroluminescent display (9).

12. Indicating instrument according to one of Claims 1 to 10, characterized in that the cover plate (23) is inclined with respect to a viewer plane such that a black surface in the cover plate (23) is reflected towards the viewer plane.

## Revendications

1. Instrument d'affichage comprenant un premier affichage ainsi qu'un autre affichage électronique, cet autre affichage électronique étant prévu au moins en partie sur le côté tourné vers l'observateur, devant le premier affichage, ainsi qu'un affichage électroluminescent (9), le premier affichage (70) étant soit un cadran (7) devant lequel se trouve une aiguille mobile (6), un affichage LCD ou un affichage LED, le premier affichage (7) étant susceptible d'être mis dans un état éclairé ou dans un état auto-éclairant, en ce que par exemple l'aiguille mobile (6) et le cadran (7) sont éclairés à l'aide d'un moyen d'éclairage (3) et le premier affichage (70) apparaissant comme une surface sombre pratiquement régulière à l'état non éclairé ou non auto-éclairant.

2. Instrument d'affichage selon la revendication 1,
caractérisé en ce que
dans le cas d'un cadran avec une aiguille, le cadran (7) est monté sur un support (8) conducteur de lumière.

3. Instrument d'affichage selon la revendication 2,
caractérisé en ce que
le support (8) comporte une cavité (21) dans laquelle l'aiguille (6) pénètre au moins partiellement et l'affichage électroluminescent (9) se trouve devant l'aiguille (6).

4. Instrument d'affichage selon l'une des revendications 1 à 3,
caractérisé en ce que
l'affichage électroluminescent (9), dans le cas d'un cadran avec une aiguille, est fixé sur le cadran (7).

5. Instrument d'affichage selon l'une des revendications 1 à 4,
caractérisé en ce que
dans le cas d'un cadran avec une aiguille, pour former l'aiguille (6), il est prévu un organe (5), conducteur de lumière, en forme de disque, dont la face avant est recouverte par une couche de revêtement (10) au moins pratiquement imperméable à la lumière, cette couche ne laissant subsister qu'une découpe (11) servant d'aiguille (6).

6. Instrument d'affichage selon l'une des revendications 1 à 5,
caractérisé en ce que
dans le cas d'un cadran avec une aiguille, pour former l'aiguille (6), il est prévu un corps (12) en forme de disque au moins pratiquement opaque à la lumière, et qui comporte une découpe (13) servant d'aiguille (6).

7. Instrument d'affichage selon l'une des revendications 1 à 6,
caractérisé en ce que
dans le cas d'un cadran avec une aiguille, l'aiguille (6) est montée à rotation sur un axe (4) avec un mécanisme d'entraînement d'aiguille (1) qui est fixé avec le moyen d'éclairage (3) sur une plaque de base (2).

8. Instrument d'affichage selon l'une des revendications 1 à 7,
caractérisé en ce qu'
entre le premier affichage (70) et l'affichage électroluminescent (9) il est prévu au moins un autre affichage électroluminescent.

9. Instrument d'affichage selon l'une des revendications 1 à 8,
caractérisé en ce que
devant le premier affichage (70) et l'affichage électroluminescent (9) il est prévu un disque de recouvrement (23).

10. Instrument d'affichage selon la revendication 9,
caractérisé en ce que
le disque de recouvrement (23) est réalisé sous la forme d'un polarisateur à polarisation circulaire.

11. Instrument d'affichage selon les revendications 9 ou 10,
caractérisé en ce que
le disque de recouvrement (23) comporte un filtre de couleur (26) pratiquement transparent seulement pour la longueur d'onde de l'affichage électroluminescent (9).

12. Instrument d'affichage selon l'une des revendications 1 à 10,
caractérisé en ce que
le disque de recouvrement (23) est incliné par rapport au plan d'observation pour réfléchir une surface noire dans le disque de recouvrement (23) par rapport au plan d'observation.
